# EUROPEAN PATENT APPLICATION

(11) **EP 4 582 684 A1**
(43) Date of publication of application: **09.07.2025**
(21) Application number: 24869420.0
(22) Date of filing: 08.07.2024
(51) Int. Cl.: F02D 41/06, F02M 31/10, F02N 19/00

(54) **METHANOL ENGINE STARTING METHOD AND APPARATUS, HEATING DEVICE, AND COMPUTER MEDIUM**

(30) Priority: 13.11.2023 CN 202311508398; 13.11.2023 CN 202323064499 U
(71) Applicant: Zhejiang Geely Holding Group Co., Ltd., Hangzhou, Zhejiang 310000 (CN); Zhejiang Geely Farizon New Energy Commercial Vehicle Group Co., Ltd., Hangzhou, Zhejiang 310000 (CN); Tianjin Alcohol Hydrogen Research and Development Co., Ltd, Binhai New Area, Tianjin 300457 (CN)
(72) Inventor: CHEN, Chong, Hangzhou Zhejiang 310000 (CN); ZHU, Jianping, Hangzhou Zhejiang 310000 (CN)
(74) Representative: Osterhoff, Utz
(86) International application number: PCT/CN2024/104256
(87) International publication number: WO 2025/102776

(57) **Abstract**

The present application discloses a method and a device for starting a methanol engine, a heating device and a computer-readable storage medium. The method for starting the methanol engine of the present application is applied to a heating device, and the heating device obtains a first engine water temperature of the methanol engine by detecting the methanol engine, and determines whether the first engine water temperature is less than a first temperature threshold; in response to that the first engine water temperature is less than the first temperature threshold, the methanol engine is heated, and the methanol engine is detected to obtain a second engine water temperature of the methanol engine; when the second engine water temperature is greater than or equal to the second temperature threshold, the methanol engine is controlled to inject methanol fuel to complete the start-up operation.

## Description

### CROSS-REFERENCE TO RELATED APPLICATIONS

This present application claims priority to Chinese patent application No. 202311508398.5 filed on November 13, 2023 and Chinese patent application No. 202323064499.6 filed on November 13, 2023, the entire contents of which are incorporated by reference into the present application.

### TECHNICAL FIELD

The present application relates to the technical field of automobiles, and in particular to a method and a device for starting a methanol engine, a heating device and a computer-readable storage medium.

### BACKGROUND

With the continuous development of new energy technology, methanol fuel has gradually become the main fuel used by new energy vehicles due to its rich resources, good power performance, high thermal efficiency, low energy consumption, and good emissions. However, once a new energy vehicle starts a methanol engine in a low temperature environment below 0°C, the methanol fuel injected into the methanol engine will not be completely volatilized due to its large latent heat of vaporization and poor evaporation in a low temperature environment, which will cause the methanol engine to fail to start easily.

In related technologies, when a methanol engine is started in a low temperature environment, the methanol engine often first injects part of the gasoline fuel to complete the start, thereby increasing the engine water temperature, and then switches from gasoline fuel to methanol fuel when the engine water temperature reaches the preset temperature threshold, so that the methanol engine can ensure that the injected methanol fuel can be completely vaporized.

However, using the above method to start a methanol engine in a low temperature environment requires technicians to add an additional gasoline fuel supply system to the methanol engine, which greatly increases the purchase cost of new energy vehicles and the emissions of new energy vehicles are prone to exceed the standard.

### SUMMARY

The main purpose of the present application is to provide a method and a device for starting a methanol engine, a heating device and a computer-readable storage medium, aiming to enable the heating device to heat the methanol engine, so that the methanol engine can be started only with injecting methanol fuel in a low temperature environment.

To achieve the above purpose, the present application provides a method for starting a methanol engine, applied to a heating device, and the heating device heats the methanol engine connected to itself by igniting methanol fuel. The method for starting a methanol engine includes the following steps:
detecting the methanol engine to obtain a first engine water temperature of the methanol engine, and determining whether the first engine water temperature is less than a first temperature threshold;
in response to that the first engine water temperature is less than the first temperature threshold, heating the methanol engine, and detecting the methanol engine to obtain a second engine water temperature of the methanol engine; and
in response to that the second engine water temperature is greater than or equal to a second temperature threshold, controlling the methanol engine to inject the methanol fuel to complete a start-up operation, the second temperature threshold is greater than the first temperature threshold.

In an embodiment, the heating device includes: a methanol ignition unit; and the step of heating the methanol engine includes:
obtaining the methanol fuel, and generating a mixed fuel gas corresponding to the methanol fuel in the methanol ignition unit; and
obtaining low-temperature engine circulating water in the methanol engine, and heating the methanol engine through heat generated by the mixed fuel gas and the low-temperature engine circulating water.

In an embodiment, the heating device further includes: a methanol delivery unit and an air intake unit; the methanol delivery unit is connected to the methanol ignition unit, and the methanol ignition unit is connected to the air intake unit; the step of generating the mixed fuel gas corresponding to the methanol fuel in the methanol ignition unit includes:
obtaining a first control signal; and
based on the first control signal, controlling the methanol delivery unit and the air intake unit to generate a mixed fuel gas corresponding to the methanol fuel in the methanol ignition unit.

In an embodiment, the methanol ignition unit includes: a methanol injector rail, an electronically controlled methanol injector and a pre-combustion chamber; the methanol injector rail is connected to the electronically controlled methanol injector, and the electronically controlled methanol injector is connected to the pre-combustion chamber; the step of based on the first control signal, controlling the methanol delivery unit and the air intake unit to generate the mixed fuel gas corresponding to the methanol fuel in the methanol ignition unit includes:
controlling the methanol delivery unit to input the methanol fuel into the methanol injector rail based on the first control signal, and controlling the air intake unit to input air into the pre-combustion chamber based on the first control signal; and
obtaining a second control signal, and controlling the electronically controlled methanol injector to inject the methanol fuel into the pre-combustion chamber based on the second control signal, to generate the mixed fuel gas corresponding to the methanol fuel in the pre-combustion chamber through the methanol fuel and the air.

In an embodiment, the heating device further includes: a heat exchange unit, and the heat exchange unit is connected to the methanol ignition unit; the step of obtaining low-temperature engine circulating water in the methanol engine includes:
obtaining a third control signal; and
based on the third control signal, controlling the heat exchange unit to allow the low-temperature engine circulating water in the methanol engine to enter the heat exchange unit.

In an embodiment, after the step of controlling the methanol engine to inject methanol fuel to complete the start-up operation, the method further includes:
detecting the methanol engine to obtain a third engine water temperature of the methanol engine, and determining whether the third engine water temperature is greater than or equal to a third temperature threshold; and
in response to that the third engine water temperature is greater than or equal to the third temperature threshold, stopping heating the methanol engine, the third temperature threshold is greater than the second temperature threshold.

In an embodiment, after the step of controlling the methanol engine to inject methanol fuel to complete the start-up operation, the method further includes:
detecting the methanol engine to obtain a real-time methanol concentration value of the methanol engine, and determining whether the real-time methanol concentration value is greater than or equal to a methanol concentration threshold; and
in response to that the real-time methanol concentration value is greater than or equal to the methanol concentration threshold, outputting preset reminder information and stopping heating the methanol engine.

**In** addition, to achieve the above purpose, the present application also provides a device for starting a methanol engine, applied to a heating device, the heating device heats the methanol engine connected to the heating device by igniting methanol fuel, and the device for starting the methanol engine includes:
a first detection module, configured to detect the methanol engine to obtain a first engine water temperature of the methanol engine, and determine whether the first engine water temperature is less than a first temperature threshold;
a second detection module, configured to, in response to that the first engine water temperature is less than the first temperature threshold, heat the methanol engine, and detect the methanol engine to obtain a second engine water temperature of the methanol engine; and
an engine starting module, configured to, in response to that the second engine water temperature is greater than or equal to a second temperature threshold, control the methanol engine to inject methanol fuel to complete the start-up operation, the second temperature threshold is greater than the first temperature threshold.

**In** addition, to achieve the above purpose, the present application also provides a heating device, including:
a heat exchange shell;
a methanol delivery unit;
a methanol ignition unit;
a heat exchange unit; and
an air intake unit;
the heat exchange unit, the air intake unit and the methanol ignition unit are provided in the heat exchange shell, and the methanol ignition unit is connected to the heat exchange unit and the air intake unit respectively; and
the methanol ignition unit is connected to the methanol delivery unit to ignite the methanol fuel delivered by the methanol delivery unit.

**In** an embodiment, the methanol ignition unit includes: a methanol injector rail, a methanol injector, an ignition electrode, a pre-combustion chamber and a main combustion chamber;
the main combustion chamber is connected to the heat exchange unit, and the main combustion chamber includes a pre-combustion chamber shell; the pre-combustion chamber shell is configured to form the pre-combustion chamber in the main combustion chamber, and the pre-combustion chamber is connected to the air intake unit;
the ignition electrode is provided in the pre-combustion chamber, and the ignition electrode is connected to the methanol injector; the methanol injector is connected to the methanol injector rail, and the methanol injector rail is connected to the methanol delivery unit; and
the methanol injector is an electronically controlled methanol injector or a mechanical methanol injector.

**In** an embodiment, the main combustion chamber further includes a heat exchange plate; and the heat exchange plate is connected to the heat exchange unit.

**In** an embodiment, a quantity of the ignition electrodes is greater than or equal to a preset quantity of electrodes, and the preset quantity of electrodes is greater than or equal to 2.

**In** an embodiment, the methanol ignition unit further includes: an exhaust channel, a muffler and a drainage channel; and the muffler is provided at the drainage channel, and the drainage channel and the exhaust channel are respectively communicated with the main combustion chamber.

**In** an embodiment, the heat exchange unit includes: a heat exchange medium channel, a heat exchange medium inlet, a heat exchange medium outlet, an electronic water pump and an electronic water pump water inlet;
the heat exchange medium inlet is communicated with the heat exchange medium channel, and the heat exchange medium channel is communicated with the heat exchange medium outlet and is connected to the methanol ignition unit; and
the electronic water pump water inlet is connected to the electronic water pump, and the electronic water pump is connected to the heat exchange medium inlet.

**In** an embodiment, the methanol delivery unit includes: a methanol tank, an electric infusion pump and a methanol filter; and
the methanol tank is connected to the electric infusion pump; the electric infusion pump is connected to the methanol filter, and the methanol filter is connected to the methanol ignition unit.

In an embodiment, the methanol tank includes: a methanol tank shell, a liquid level gauge and an oil suction filter, and the liquid level gauge and the oil suction filter are both provided at the methanol tank shell.

In an embodiment, the air intake unit includes: an air intake filter and an air intake fan; the air intake filter is connected to the air intake fan, and the air intake fan is connected to the methanol ignition unit.

In an embodiment, the heating device is further provided with a methanol vapor concentration sensor and a high temperature alarm sensor; and
the methanol vapor concentration sensor and the high temperature alarm sensor are respectively provided at the heat exchange shell; the methanol vapor concentration sensor is connected to the methanol ignition unit, and the high temperature alarm sensor is connected to the heat exchange unit.

In an embodiment, the heating device is further provided with a controller; and
the controller is provided in the heat exchange shell, and is respectively connected to the methanol ignition unit, the heat exchange unit, the methanol delivery unit and the air intake unit.

In addition, to achieve the above purpose, the present application also provides a computer-readable storage medium, a computer program is stored on the computer-readable storage medium; when the computer program is executed by a processor, the steps of the method for starting the methanol engine as described above are implemented.

The embodiments of the present application provide a method and a device for starting a methanol engine, a heating device and a computer-readable storage medium, the heating device heats a methanol engine connected to itself by igniting methanol fuel; the method for starting a methanol engine including the following steps: obtaining a first engine water temperature of the methanol engine by detecting the methanol engine, and determining whether the first engine water temperature is less than a first temperature threshold; and in response to that the first engine water temperature is less than the first temperature threshold, heating the methanol engine, and detecting the methanol engine to obtain a second engine water temperature of the methanol engine; and in response to that the second engine water temperature is greater than or equal to a second temperature threshold, controlling the methanol engine to inject methanol fuel to complete the start-up operation. The second temperature threshold is greater than the first temperature threshold.

In the embodiment, when the methanol engine is started in a low temperature environment, the heating device first detects the methanol engine connected to itself to obtain the first engine water temperature of the methanol engine when it is not started, and determines whether the first engine water temperature is less than a preset first temperature threshold. Thereafter, if the heating device determines that the first engine water temperature is less than the first temperature threshold, the methanol engine is heated. At the same time, during the process of heating the methanol engine, the heating device detects the methanol engine again to obtain the second engine water temperature of the methanol engine. Finally, when the heating device determines that the second engine water temperature is greater than the second temperature threshold, the heating device controls the methanol engine to inject methanol fuel to complete the start-up operation.

The heating device includes: a heat exchange shell, a methanol delivery unit, a methanol ignition unit, a heat exchange unit and an air intake unit. The heat exchange unit and the air intake unit are provided at the heat exchange shell, and the heat exchange unit and the air intake unit are respectively connected to the methanol ignition unit. The methanol ignition unit is connected to the methanol delivery unit through a pipeline to ignite the methanol fuel delivered by the methanol delivery unit.

That is, the heating device provided by the present application is provided with a heat exchange unit, an air intake unit and a methanol ignition unit on a heat exchange shell, and the heat exchange unit and the air intake unit are respectively connected to the methanol ignition unit. At the same time, a methanol delivery unit is configured to be connected to the methanol ignition unit through a pipeline, so that the methanol delivery unit delivers methanol fuel to the methanol ignition unit through the pipeline. The air intake unit delivers air to the methanol ignition unit, so that the methanol ignition unit can ignite the methanol fuel, so that the methanol fuel burns and generates heat, and then the engine circulating cooling water obtains the heat generated when the methanol fuel is ignited through the heat exchange unit. Finally the engine circulating cooling water carries the heat to heat the methanol engine to increase the temperature of the methanol engine.

In this way, the present application solves the technical problem that technicians in the related art need to spend a lot of money to add an additional gasoline fuel supply system in the methanol engine to ensure that the methanol engine can be started by first injecting part of the gasoline fuel when starting in a low-temperature environment. That is, the present application ignites the methanol fuel through a heating device to generate heat, and uses the heat to heat the engine circulating water of the methanol engine to increase the temperature of the methanol engine, so that when the methanol engine injects methanol fuel in a low-temperature environment, the methanol fuel can also be fully volatilized and form a mixed fuel gas when mixed with the air, thereby enabling the methanol engine to be started only with methanol fuel in a low-temperature environment.

### BRIEF DESCRIPTION OF THE DRAWINGS

FIG. 1 is a flowchart of a method for starting a methanol engine according to a first embodiment of the present application.
FIG. 2 is a simplified structural diagram of a heating device according to an embodiment of the present application.
FIG. 3 is a detailed structural diagram of the heating device according to an embodiment of the present application.
FIG. 4 is a structural schematic diagram of one injection hole according to an embodiment of the present application.
FIG. 5 is a structural schematic diagram of multiple injection holes according to an embodiment of the present application.
FIG. 6 is a structural schematic diagram of an ignition electrode according to an embodiment of the present application.
FIG. 7 is a flowchart of the method for starting a methanol engine according to another embodiment of the present application.
FIG. 8 is a schematic diagram of functional modules of a device for starting the methanol engine according to an embodiment of the present application.

The realization of the objective, functional characteristics, and advantages of the present application are further described with reference to the accompanying drawings and in conjunction with the embodiments.

### Reference signs:

1. Methanol tank; 2. Electric infusion pump; 3. Methanol filter; 4. Controller; 5. Methanol injector rail; 6. Electronically controlled methanol injector; 7. Ignition electrode; 8. Methanol spray; 9. Pre-combustion chamber; 10. Main combustion chamber; 11. Heat exchange medium channel; 12. Main combustion chamber shell; 13. Heat exchange shell; 14. Exhaust channel; 15. Muffler; 16. Heat exchange plate; 17. Heat exchange medium inlet; 18. Heat exchange medium outlet; 19. Electronic water pump; 20. Electronic water pump water inlet; 21. Drain pipe; 22. Air intake filter; 23. Air intake fan; 24. Methanol vapor concentration sensor; 25. High temperature alarm sensor; 26. Methanol tank shell; 27. Liquid level gauge; 28. Oil suction filter; 29. Oil filling hole; 30. Heat exchange unit; 31. Methanol ignition unit; 32. Air intake unit; 33. Methanol delivery unit.

### DETAILED DESCRIPTION OF THE EMBODIMENTS

It should be understood that the specific embodiments described herein are only used to explain the present application and are not used to limit the present application.

It should be noted that the descriptions of "first", "second", etc. in the present application are only for descriptive purposes and cannot be understood as indicating or implying their relative importance or implicitly indicating the number of technical features indicated. Therefore, the features defined as "first" and "second" may explicitly or implicitly include at least one of the features. **In** addition, the technical solutions between the various embodiments can be combined with each other, but they must be based on the ability of those skilled in the art to implement them. When the combination of technical solutions is contradictory or cannot be implemented, it should be considered that such a combination of technical solutions does not exist and is not within the scope of protection required by the present application.

**In** the embodiments of the present application, unless otherwise clearly specified and defined, the terms "connection", "fixed", etc. should be understood in a broad sense. For example, "fixed" can be a fixed connection, a detachable connection, or an integral connection; it can be a mechanical connection or an electrical connection; it can be directly connected or indirectly connected through an intermediate medium, it can be the internal connection of two elements or the interaction relationship between two elements, unless otherwise clearly defined. For those skilled in the art, the specific meanings of the above terms in the embodiments of the present application can be understood according to the specific circumstances.

**The** following will be combined with the drawings in the embodiments of the present application to clearly and completely describe the technical solutions in the embodiments of the present application. Obviously, the described embodiments are only part of the embodiments of the present application, not all of the embodiments. Based on the embodiments in the present application, all other embodiments obtained by those skilled in the art without creative work are within the scope of protection of the present application.

With the continuous development of new energy technology, methanol fuel has gradually become the main fuel used by new energy vehicles due to its rich resources, good power performance, high thermal efficiency, low energy consumption, and good emissions. However, once a new energy vehicle starts a methanol engine in a low temperature environment below 0°C, the methanol fuel injected into the methanol engine will not be completely volatilized due to its large latent heat of vaporization and poor evaporation in a low temperature environment, which will cause the methanol engine to fail to start easily.

In related technologies, when a methanol engine is started in a low temperature environment, the methanol engine often first injects part of the gasoline fuel to complete the start, thereby increasing the engine water temperature, and then switches from gasoline fuel to methanol fuel when the engine water temperature reaches the preset temperature threshold, so that the methanol engine can ensure that the injected methanol fuel can be completely vaporized.

However, using the above method to start a methanol engine in a low temperature environment requires technicians to add an additional gasoline fuel supply system to the methanol engine, which greatly increases the purchase cost of new energy vehicles and the emissions of new energy vehicles are prone to exceed the standard.

In view of the above phenomenon, the present application proposes a method for starting a methanol engine, which is applied to a heating device, and the heating device is connected to the methanol engine. The method for starting a methanol engine includes the following steps: detecting the methanol engine to obtain the first engine water temperature of the methanol engine, and determining whether the first engine water temperature is less than the first temperature threshold; in response to that the first engine water temperature is less than the first temperature threshold, heating the methanol engine, and detecting the methanol engine to obtain the second engine water temperature of the methanol engine; in response to that the second engine water temperature is greater than or equal to the second temperature threshold, controlling the methanol engine to inject methanol fuel to complete the start-up operation, the second temperature threshold is greater than the first temperature threshold.

In this way, the present application solves the technical problem that the technicians in the related art need to spend a lot of money to add an additional gasoline fuel supply system in the methanol engine, so as to ensure that the methanol engine can be started by first injecting part of the gasoline fuel when starting in a low temperature environment. That is, the present application ignites the methanol fuel through the heating device to generate heat, and uses the heat to heat the engine circulating water of the methanol engine to increase the temperature of the methanol engine, so that when the methanol engine injects the methanol fuel in a low temperature environment, the methanol fuel can be fully volatilized and form a mixed fuel gas, so that the methanol engine can be started only with methanol fuel in a low temperature environment.

Based on the overall concept of the above-mentioned heating device and the method for starting a methanol engine of the present application, various embodiments of the method for starting a methanol engine of the present application are further proposed.

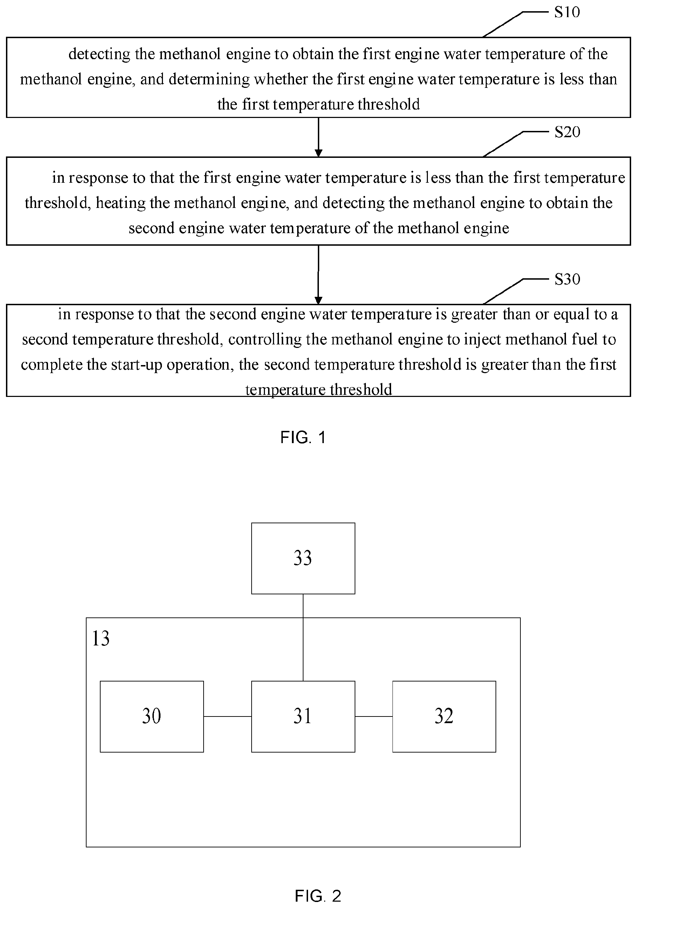

As shown in FIG. 1, which is a flowchart of the first embodiment of the method for starting a methanol engine of the present application.

Although the logical sequence is shown in the flowchart, in some cases, the method for starting a methanol engine of the present application can certainly perform the steps shown or described in a different order from here.

The method for starting a methanol engine of the present application is applied to a heating device, and the heating device heats the methanol engine connected to itself by igniting methanol fuel.

As shown in FIG. 1, in the embodiment, the method for starting the methanol engine of the present application may include the following steps:
Step S10: detecting the methanol engine to obtain the first engine water temperature of the methanol engine, and determining whether the first engine water temperature is less than the first temperature threshold.

In the embodiment, when the methanol engine needs to be started in a low temperature environment, the heating device first detects the methanol engine connected to itself, thereby obtaining the first engine water temperature of the methanol engine in an unstarted state, and determining whether the first engine water temperature is less than the first temperature threshold preset by the technician.

When the methanol engine is started in a low temperature environment below 0°C, the heating device first uses its own configured temperature sensor to detect the methanol engine, thereby obtaining the first engine water temperature corresponding to the low-temperature engine circulating water in the methanol engine when the methanol engine is not started. At the same time, the heating device obtains the first temperature threshold T1 preset by the technician, and compares the first engine water temperature with the first temperature threshold T1 to judge whether the first engine water temperature is less than the first temperature threshold T1.

Step S20: in response to that the first engine water temperature is less than the first temperature threshold, heating the methanol engine, and detecting the methanol engine to obtain the second engine water temperature of the methanol engine; and

In the embodiment, if the heating device determines that the first engine water temperature is less than the first temperature threshold, the methanol fuel is obtained and the methanol fuel is ignited to generate heat, and the heating device heats the methanol engine through the heat. At the same time, the heating device detects the methanol engine again to obtain the second engine water temperature of the methanol engine during the heating process.

If the heating device determines that the first engine water temperature is less than the first temperature threshold T1, it is determined that the methanol engine cannot complete the start-up operation at the current temperature. The heating device obtains methanol fuel and ignites the methanol fuel to generate heat. The heating device then heats the low-temperature engine circulating water in the methanol engine based on the generated heat to increase the methanol engine temperature. At the same time, the heating device uses the above-mentioned temperature sensor to detect the methanol engine again, thereby obtaining the second engine water temperature corresponding to the engine circulating water in the methanol engine when the methanol engine is heated.

In an embodiment, the heating device includes: a methanol ignition unit, and the step of "heating the methanol engine" in the above step S20 may specifically include:
Step S201: obtaining methanol fuel, and generating a mixed fuel gas corresponding to the methanol fuel in the methanol ignition unit; and
Step S202: obtaining low-temperature engine circulating water in the methanol engine, and heating the methanol engine through the heat generated by the mixed fuel gas and the low-temperature engine circulating water;
In the embodiment, when the heating device needs to heat the methanol engine, it first obtains methanol fuel through the methanol fuel supply system in the methanol engine, then the methanol fuel is used to generate a mixed fuel gas in the heating device, and the heating device ignites the mixed fuel gas to make the mixed fuel gas burn and generate heat. After that, the heating device controls the low-temperature engine circulating water in the methanol engine to flow into the heating device through the pipeline, and heats the low-temperature engine circulating water through the heat generated during the combustion of the mixed fuel gas to increase the temperature of the low-temperature engine circulating water, thereby generating high-temperature engine circulating water. The heating device then outputs the high-temperature engine circulating water to the methanol engine, thereby heating the methanol engine through the heat carried by the high-temperature engine circulating water to increase the temperature of the methanol engine.

When the heating device needs to heat the methanol engine, the heating device first obtains methanol fuel through the methanol fuel supply system in the methanol engine, and injects the methanol fuel with high pressure atomization to make the methanol fuel fully mixed with air to form a mixed fuel gas. The heating device then ignites the mixed fuel gas inside the device to make the mixed fuel gas burn stably and release heat. After that, the heating device controls the pipeline between itself and the methanol engine to make the low-temperature engine circulating water in the methanol engine flow into the heating device through the pipeline, and then obtains the heat generated in the heating device to become a higher temperature high-temperature engine circulating water. The heating device then controls the pipeline to make the high-temperature engine circulating water flow back into the methanol engine through the pipeline, so that the temperature of the methanol engine is increased by the heat carried in the high-temperature engine circulating water. In this way, the methanol engine can increase its own temperature through the engine circulating water carrying heat, so that the methanol fuel injected by itself can be fully volatilized, so that the methanol engine can be started only with injecting methanol fuel in a low temperature environment.

In an embodiment, the heating device further includes: a methanol delivery unit and an air intake unit, the methanol delivery unit is connected to the methanol ignition unit, and the methanol ignition unit is connected to the air intake unit;

The step of "generating the mixed fuel gas corresponding to the methanol fuel in the methanol ignition unit" in the above step S201 may specifically include:
Step S2011: obtaining a first control signal; and
Step S2012: based on the first control signal, controlling the methanol delivery unit and the air intake unit to generate a mixed fuel gas corresponding to the methanol fuel in the methanol ignition unit.

It should be noted that, as shown in FIG. 2, FIG. 2 is a simplified structural diagram of the heating device according to an embodiment of the present application. As shown in FIG. 2, a heat exchange shell 13 is configured on the heating device, and a heat exchange unit 30, an air intake unit 32 and a methanol ignition unit 31 are configured inside the heat exchange shell 13. The heat exchange unit 30 and the air intake unit 32 are connected to the methanol ignition unit 31 respectively, and the methanol ignition unit 31 is connected to the methanol delivery unit 33 through a pipeline.

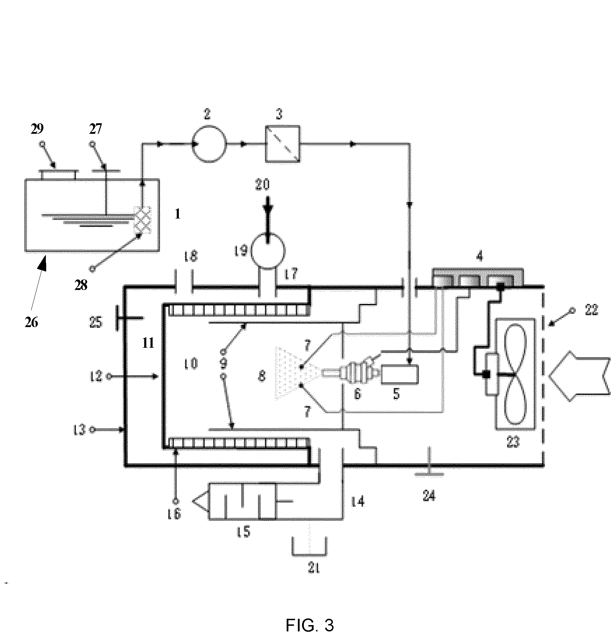

As shown in FIG. 3, which is a detailed structural diagram of the heating device according to an embodiment of the present application. As shown in FIG. 3, the methanol delivery unit is configured with: a methanol tank 1, an electric infusion pump 2 and a methanol filter 3. The methanol tank 1 is connected to the electric infusion pump 2 through a pipeline, the electric infusion pump 2 is connected to the methanol filter 3 through a pipeline, and the methanol filter 3 is connected to the methanol ignition unit through a pipeline. Similarly, as shown in FIG. 3, the air intake unit includes: an air intake filter 22 and an air intake fan 23, the air intake filter 22 is provided at the air inlet on the heat exchange shell of the heating device, and is connected to the air intake fan 23, and the air intake fan 23 can directly input the acquired air into the methanol ignition unit by rotating the fan to make the air flow.

In the embodiment, when the heating device needs to heat the methanol engine, it first controls the methanol fuel supply system in the methanol engine through the controller 4, so that the methanol fuel supply system inputs the methanol fuel to the methanol delivery unit configured in the methanol fuel supply system, and the heating device then obtains the first control signal. After that, the heating device controls the methanol delivery unit based on the first control signal, so that the methanol delivery unit inputs the methanol fuel to the methanol ignition unit configured in the heating device. At the same time, the heating device controls the intake system based on the first control signal, so that the intake system collects air and inputs the air into the methanol ignition unit, so that the methanol fuel is fully atomized and evenly mixed with the air to form a mixed fuel gas. The heating device then controls the methanol ignition unit to ignite the mixed fuel gas, so that the mixed fuel gas burns stably in the heating device and generates heat.

When the heating device needs to heat the methanol engine, the heating device first controls the methanol fuel supply system in the methanol engine, so that the methanol fuel supply system inputs the methanol fuel into the methanol tank 1 in the methanol delivery unit through the pipeline between the heating device and the methanol engine. The heating device then obtains a first control signal, and controls the methanol delivery unit based on the first control signal, so that the methanol delivery unit inputs the methanol fuel contained in the methanol tank 1 into the electric infusion pump 2 in the methanol delivery unit, and inputs the methanol fuel into the methanol filter 3 in the methanol delivery unit through the electric infusion pump 2. Then, the methanol fuel filtered by the methanol filter 3 enters the methanol ignition unit through the pipeline between the methanol delivery unit and the methanol ignition unit. At the same time, the heating device controls the operation of the air intake fan 23 in the air intake unit based on the first control signal, so that the air passes through the air intake filter 22 and the air intake fan 23 in the air intake unit to enter the methanol ignition unit, so that the methanol fuel is fully mixed with the air to form a mixed fuel gas in the methanol ignition unit. The heating device then controls the multiple ignition electrodes in the methanol ignition unit to ignite the mixed fuel gas, so that the mixed fuel gas burns stably in the heating device and generates heat. In this way, the heating device can stably obtain methanol fuel, and fully atomize the methanol fuel so that it is mixed with the obtained air to generate a mixed fuel gas, and then the mixed fuel gas is fully burned and provides sufficient heat.

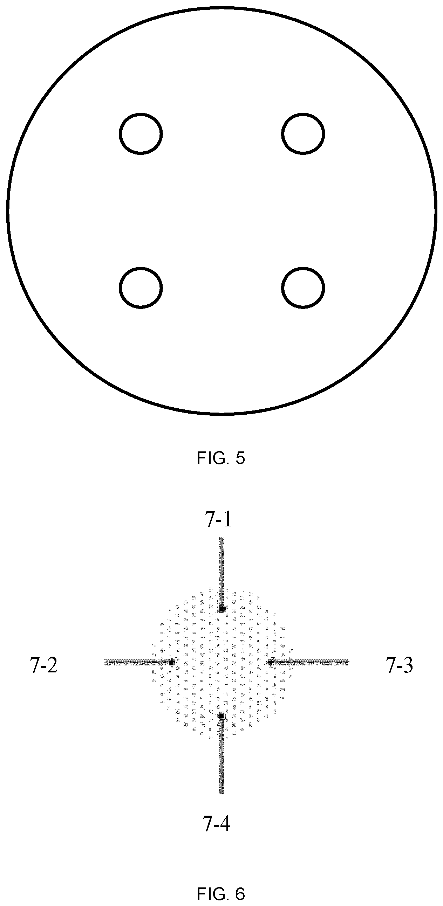

It should be noted that in the embodiment, the quantity of the multiple ignition electrodes should be greater than or equal to 2. As shown in FIG. 6, when the quantity of ignition electrodes is 4, the methanol ignition unit can ignite the mixed fuel gas simultaneously through the ignition electrodes 7-1, 7-2, 7-3 and 7-4. In this way, by configuring multiple ignition electrodes, methanol fuel can be ignited more efficiently.

In addition, in an embodiment, the methanol tank 1 is provided with a methanol tank shell 26, a liquid level gauge 27 and an oil suction filter 28. The liquid level gauge 27 and the oil suction filter 28 are provided at the methanol tank shell 26. At the same time, the liquid level gauge 27 is configured with an alarm function. The methanol tank 1 can store methanol fuel, and the methanol fuel reserve in the methanol tank 1 can be detected by the liquid level gauge 27, and then an alarm is sounded when the methanol fuel reserve is insufficient. At the same time, in the process of the methanol tank 1 delivering methanol fuel to the electric infusion pump, the filter 28 can prevent the methanol fuel from containing impurities, so as to improve the combustion efficiency of the methanol fuel. In addition, the methanol tank shell 1 is provided with an oil filling hole 29, so that methanol fuel can be injected into the methanol tank 1 through the oil filling hole 29 to ensure the content of the methanol fuel in the methanol tank 1.

In an embodiment, the methanol ignition unit includes: a methanol injector rail, an electronically controlled methanol injector and a pre-combustion chamber. The methanol injector rail is connected to the electronically controlled methanol injector, and the electronically controlled methanol injector is connected to the pre-combustion chamber.

**The** above step S2012 may specifically include:
Step S20121: controlling the methanol delivery unit to input the methanol fuel into the methanol injector rail based on the first control signal, and controlling the air intake unit to input air into the pre-combustion chamber based on the first control signal; and
Step S20122: obtaining a second control signal, and controlling the electronically controlled methanol injector to inject the methanol fuel into the pre-combustion chamber based on the second control signal to generate the mixed fuel gas corresponding to the methanol fuel in the pre-combustion chamber through the methanol fuel and the air.

In the embodiment, when the heating device is required to ignite the methanol fuel, the heating device controls the methanol delivery unit based on the first control signal obtained, so that the methanol delivery unit inputs the methanol fuel into the methanol injector rail in the methanol ignition unit. At the same time, the heating device controls the air intake unit based on the first control signal obtained, so that the air intake unit transports air into the methanol ignition unit. After that, the heating device obtains the second control signal, and controls the methanol ignition unit based on the second control signal, so that the methanol injector rail in the methanol ignition unit builds pressure on the input methanol fuel. The heating device further controls the methanol ignition unit based on the second control signal, so that the methanol injector rail injects the methanol fuel in a high-pressure state through the electronically controlled methanol injector connected to itself, thereby fully volatilizing the methanol fuel in the pre-combustion chamber and mixing the methanol fuel with the air in the pre-combustion chamber to produce mixed fuel gas.

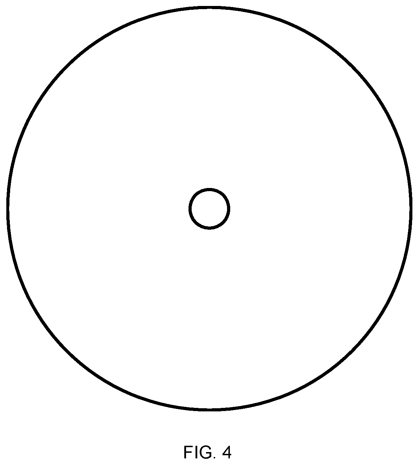

When the heating device needs to ignite methanol fuel, the heating device first controls the methanol delivery unit based on the acquired first control signal, so that the methanol delivery unit inputs the methanol fuel contained in the methanol tank 1 into the electric infusion pump 2 in the methanol delivery unit, and inputs the methanol fuel into the methanol filter 3 in the methanol delivery unit through the electric infusion pump 2, and then the methanol fuel filtered by the methanol filter 3 enters the methanol ignition unit through the pipeline between the methanol delivery unit and the methanol ignition unit. At the same time, the heating device controls the operation of the air intake fan 23 in the air intake unit based on the first control signal, so that air enters the methanol ignition unit through the air intake filter 22 and the air intake fan 23 in the air intake unit. Afterwards, the heating device determines the required methanol injection amount based on the heat that needs to be generated, and generates a second control signal based on the methanol injection amount, so as to control the methanol ignition unit through the second control signal, so that the methanol injector rail 5 in the methanol ignition unit establishes a pressure value corresponding to the methanol injection amount for the methanol fuel input from the methanol tank 1. **The** heating device controls the electronically controlled methanol injector 6 connected to the methanol injector rail 5 based on the second control signal, so that the electronically controlled methanol injector 6 continuously injects the methanol fuel in a high-pressure state through one injection hole as shown in FIG. 4 or multiple injection holes as shown in FIG. 5 configured by itself, and then the methanol fuel enters the pre-combustion chamber 9 connected to the electronically controlled methanol injector 6 in an atomized form, so that the methanol spray 8 formed after the methanol fuel is atomized is mixed with air in the pre-combustion chamber 9 to form a mixed fuel gas. Finally, the heating device controls the methanol ignition unit so that the four ignition electrodes 7~1 to 7~4 as shown in FIG. 6 configured on the pre-combustion chamber 9 generate sparks at the same time, thereby igniting the mixed fuel gas, and allowing the mixed fuel gas to burn stably in the pre-combustion chamber 9, and then allowing the heat generated by the mixed fuel gas to enter the main combustion chamber 10. **In** this way, the heating device makes the methanol fuel enter a high-pressure state through the methanol injector rail 5, and accurately injects the methanol fuel according to the methanol demand through the electronically controlled methanol injector 6, which can make the methanol fuel better atomized and form a mixed fuel gas in the pre-combustion chamber, thereby making the methanol fuel burn more stably and providing heat.

It should be noted that, in the embodiment and another embodiment, as shown in FIG. 3, the methanol ignition unit is also configured with an exhaust channel 14, a muffler 15 and a drainage channel 21. The exhaust channel 14 and the drainage channel 21 are both provided at the heat exchange shell 13 and connected to the main combustion chamber 10. The muffler 15 is provided at the drainage channel 21. In this way, when the methanol spray 8 is burning, the exhaust gas generated in the main combustion chamber 10 can be discharged from the pipeline through the exhaust channel 14. At the same time, the water vapor generated by the methanol spray 8 during the combustion process will form condensed water after condensation. The condensed water can be discharged from the pipeline through the drainage channel 21 to avoid the condensed water remaining in the pipeline from freezing under low temperature environment. At the same time, the muffler 15 is provided at the tail end of the drainage channel 21. The muffler 15 can reduce the noise generated by the heating device when igniting the methanol spray 8, thereby further improving the riding experience of the passengers.

In an embodiment, the heating device further includes: a heat exchange unit, and the heat exchange unit is connected to the methanol ignition unit.

The step of "obtaining low-temperature engine circulating water in the methanol engine" in the above step S202 may specifically include:
Step S2021: obtaining a third control signal; and
Step S2022: based on the third control signal, controlling the heat exchange unit to allow the low-temperature engine circulating water in the methanol engine to enter the heat exchange unit.

**In** the embodiment, after the heating device successfully ignites the methanol fuel and releases heat, it is also necessary to obtain a third control signal for controlling the heat exchange unit configured by the heating device itself. Afterwards, the heating device controls the heat exchange unit based on the third control signal so that the low-temperature engine circulating water in the methanol engine in a low-temperature state enters the heat exchange unit through the pipeline. After that, the heating device generates a fourth control signal and controls the electronic water pump based on the fourth control signal to make the electronic water pump send the low-temperature engine circulating water at the water inlet of the electronic water pump into the heat exchange medium inlet, so that the low-temperature engine circulating water flows into the heat exchange medium channel through the heat exchange medium inlet, and obtains the heat in the main combustion chamber through the heat exchange plate configured on the main combustion chamber shell in the heat exchange medium channel, thereby increasing its own temperature to become the high-temperature engine circulating water with higher temperature. Finally, the heating device controls the heat exchange unit again based on the third control signal, so that the high-temperature engine circulating water can flow back into the methanol engine through the pipeline when it flows to the heat exchange medium outlet communicated with the heat exchange medium channel, thereby increasing the temperature of the methanol engine through the heat carried by itself.

As shown in FIG. 3, when the heating device successfully ignites the methanol fuel and generates heat in the main combustion chamber 10, the main combustion chamber 10 can transfer the heat contained in itself to the heat exchange medium channel 11 in the heat exchange unit on the other side of the main combustion chamber shell 12 through the heat exchange plate 16 configured on the main combustion chamber shell 12. At this time, the heating device obtains a third control signal for controlling the heat exchange unit, and controls the heat exchange unit based on the third control signal, so that the low-temperature engine circulating water in the methanol engine in a low-temperature state can flow through the pipeline into the electronic water pump water inlet 20 configured in the heat exchange unit. Then the heating device controls the electronic water pump 19 connected to the electronic water pump water inlet 20 to input the low-temperature engine circulating water in the electronic water pump water inlet 20 to the heat exchange medium inlet 17 connected to the heating device. The low-temperature engine circulating water then flows into the heat exchange medium channel 11 in the heat exchange unit through the heat exchange medium inlet 17, and obtains the heat in the main combustion chamber 10 through the heat exchange medium channel 11, thereby becoming a high-temperature engine circulating water. After that, the high-temperature engine circulating water flows into the heat exchange medium outlet 18 connected to the heat exchange medium channel 11 through the heat exchange medium channel 11. At this time, the heating device further sets the heat exchange unit according to the third control signal to make the high-temperature engine circulating water flow back to the methanol engine through the pipeline, thereby heating the methanol engine. In this way, the heating device can smoothly transfer the heat generated in the main combustion chamber to the engine circulating water, and then make the engine circulating water carrying heat return to the methanol engine and heat the methanol engine.

Step S30: in response to that the second engine water temperature is greater than or equal to a second temperature threshold, controlling the methanol engine to inject methanol fuel to complete the start-up operation, the second temperature threshold is greater than the first temperature threshold.

In the embodiment, the heating device obtains a second temperature threshold preset by a technician that is higher than the first temperature threshold, and compares the detected second engine water temperature with the second temperature threshold to determine whether the second engine water temperature is greater than or equal to the second temperature threshold. **If** the heating device determines that the second engine water temperature is greater than or equal to the second temperature threshold, it is determined that the methanol engine meets the startup conditions, and then the heating device generates a fourth control signal, and controls the methanol engine to inject methanol fuel based on the fourth control signal, so that the methanol engine completes the startup.

After obtaining the second engine water temperature, the heating device obtains the second temperature threshold T2 preset by the technician that is higher than the first temperature threshold T1, and compares the second engine water temperature with the second temperature threshold T2 to obtain a second comparison result. Afterwards, if the heating device determines that the second comparison result is that the second engine water temperature is greater than or equal to the second temperature threshold T2, it is determined that under this temperature condition, the methanol fuel injected can be volatilized normally, and the heating device generates a fourth control signal, and controls the methanol engine to inject methanol fuel based on the fourth control signal.

**In** the embodiment, when the methanol engine needs to be started in a low temperature environment, the heating device first detects the methanol engine connected to itself, thereby obtaining the first engine water temperature of the methanol engine in the unstarted state, and determines whether the first engine water temperature is less than the first temperature threshold preset by the technician. After that, if the heating device determines that the first engine water temperature is less than the first temperature threshold, the methanol fuel is obtained and the methanol fuel is ignited to generate heat. The heating device heats the methanol engine through the heat. At the same time, the heating device detects the methanol engine again to obtain the second engine water temperature of the methanol engine during the heating process. Finally, the heating device obtains the second temperature threshold preset by the technician that is higher than the first temperature threshold, and compares the detected second engine water temperature with the second temperature threshold to determine whether the second engine water temperature is greater than or equal to the second temperature threshold. If the heating device determines that the second engine water temperature is greater than or equal to the second temperature threshold, it is determined that the methanol engine meets the start-up operation conditions, and the heating device generates a fourth control signal, and controls the methanol engine to inject methanol fuel based on the fourth control signal, so that the methanol engine completes the start-up operation.

In this way, the present application solves the technical problem that technicians in the related art need to spend a lot of money to add an additional gasoline fuel supply system in the methanol engine to ensure that the methanol engine can be started by first injecting part of the gasoline fuel when starting in a low-temperature environment. That is, the present application ignites the methanol fuel through a heating device to generate heat, and uses the heat to heat the engine circulating water of the methanol engine to increase the temperature of the methanol engine, so that when the methanol engine injects methanol fuel in a low-temperature environment, the methanol fuel can also be fully volatilized and form a mixed fuel gas when mixed with the air, thereby enabling the methanol engine to be started only with methanol fuel in a low-temperature environment.

Based on the first embodiment of the method for starting the methanol engine of the present application, the second embodiment of the method for starting the methanol engine of the present application is proposed.

In an embodiment, after the above step S30, the method for starting the methanol engine of the present application may further include the following steps:
Step A10: detecting the methanol engine to obtain a third engine water temperature of the methanol engine, and determining whether the third engine water temperature is greater than or equal to a third temperature threshold; and
Step A20: in response to that the third engine water temperature is greater than or equal to the third temperature threshold, stopping heating the methanol engine, the third temperature threshold is greater than the second temperature threshold.

In the embodiment, after the methanol engine is successfully started, the heating device also detects the methanol engine again to obtain the third engine water temperature corresponding to the methanol engine in the starting state. At the same time, the heating device obtains the third temperature threshold preset by the technician that is higher than the second temperature threshold, and compares the third engine water temperature with the third temperature threshold to determine whether the third engine water temperature is greater than or equal to the third temperature threshold. Afterwards, if the heating device determines that the third engine water temperature is greater than or equal to the third temperature threshold, it is determined that the methanol engine has completed the preheating work, thereby stopping heating the methanol engine to allow the methanol engine to run alone.

After the methanol engine is successfully started, the heating device uses the above-mentioned temperature sensor to detect the methanol engine again to obtain the third engine water temperature when the methanol engine is running. At the same time, the heating device obtains the third temperature threshold T3 preset by the technician that is higher than the second temperature threshold T2, and compares the third engine water temperature with the third temperature threshold T3 to determine whether the third engine water temperature is greater than or equal to the third temperature threshold T3. Afterwards, if the heating device determines that the third engine water temperature is greater than or equal to the third temperature threshold T3, it is determined that the methanol engine has completed preheating, and that continuing to heat the methanol engine will cause the methanol engine to overheat, thereby posing a certain operating risk. The heating device then generates a fifth control for stopping heating the methanol engine. The fifth control signal is used to control the methanol delivery unit, methanol ignition unit and air intake unit configured by the heating device sequentially based on the fifth control signal, so that the electronically controlled methanol injector 6 in the methanol ignition unit stops injecting methanol fuel, and the multiple ignition electrodes 7-1 to 7-4 are configured to stop ignition, thereby ensuring that the methanol fuel in the pre-combustion chamber 9 stops burning. At the same time, the heating device controls the electric infusion pump 2 in the methanol delivery unit and the electronic water pump 19 in the heat exchange unit based on the fifth control signal to stop the electric infusion pump 2 and the electronic water pump 19 from running, thereby stopping the delivery of methanol fuel and engine circulating water to the heating device. Finally, the heating device controls the air intake fan 23 in the air intake unit based on the fifth control signal to stop the air intake fan 23 from rotating, thereby stopping the supply of air to the pre-combustion chamber 9. In this way, the heating device can detect the operating temperature of the methanol engine in time, and ensure that the heating work of the methanol engine is stopped when the operating temperature reaches the preset value, thereby ensuring that the methanol engine will not overheat and generate risks during operation.

Based on the first embodiment and/or the second embodiment of the method for starting the methanol engine of the present application, the third embodiment of the method for starting the methanol engine of the present application is proposed here.

In an embodiment, after the above step S30, the method for starting the methanol engine of the present application may further include the following steps:
Step B10: detecting the methanol engine to obtain a real-time methanol concentration value of the methanol engine, and determining whether the real-time methanol concentration value is greater than or equal to a methanol concentration threshold;
Step B20: in response to that the real-time methanol concentration value is greater than or equal to the methanol concentration threshold, outputting a preset reminder information and stopping heating the methanol engine.

In the embodiment, after the methanol engine is successfully started, the heating device also detects itself to obtain the real-time methanol concentration value. At the same time, the heating device obtains the methanol concentration threshold preset by the technician, and compares the real-time methanol concentration value with the methanol concentration threshold to determine whether the real-time methanol concentration value is greater than or equal to the methanol concentration threshold. Afterwards, if the heating device determines that the real-time methanol concentration value is greater than or equal to the methanol concentration threshold, it obtains the preset reminder information and inputs the reminder information to the vehicle system connected to the heating device, and the vehicle system displays is provided with a display device, and the display device is used to display the reminder information to the user. At the same time, the heating device stops heating the methanol engine.

After the methanol engine is successfully started, the heating device can also detect the methanol concentration value contained in itself through the methanol vapor concentration sensor 24 to obtain its own real-time methanol concentration value. At the same time, the heating device obtains the methanol concentration threshold preset by the technician, and compares the real-time methanol concentration value with the methanol concentration threshold to determine whether the real-time methanol concentration value is greater than or equal to the methanol concentration threshold. After that, if the heating device determines that the real-time methanol concentration value is greater than or equal to the methanol concentration threshold, it determines that there is a flash explosion risk, thereby generating the above-mentioned fifth control signal. Then the heating device controls the methanol delivery unit, methanol ignition unit and air intake unit sequentially based on the fifth control signal to stop the heating of the methanol engine. At the same time, the heating device obtains the reminder information preset by the technician, and sends the reminder information to the vehicle system of the new energy vehicle where it is located, and the vehicle system displays the reminder information to the user through the display device. In this way, the heating device can also detect the methanol vapor concentration contained in itself, and stop heating the methanol engine in time when it is determined that the methanol vapor concentration is high, thereby further improving safety.

Based on the various embodiments of the method for starting the methanol engine of the present application, another embodiment of the method for starting the methanol engine of the present application is proposed here.

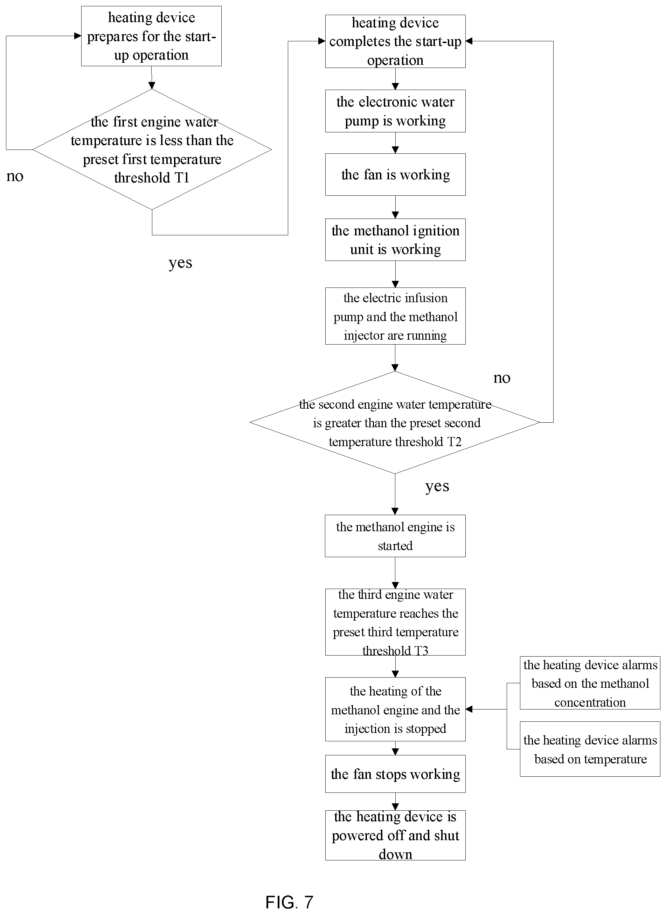

As shown in FIG. 7, which is a flowchart of the method for starting the methanol engine according to another embodiment of the present application. As shown in FIG 7, in the embodiment, when the methanol engine needs to be started in a low temperature environment, the heating device can first perform a system self-check to complete the start-up operation preparation. After that, the heating device is provided with a temperature sensor, which is configured to detect the methanol engine to obtain the first engine water temperature of the methanol engine. When the heating device determines that the first engine water temperature is less than the preset first temperature threshold T1, the heating device controls the electronic water pump to work so that the low-temperature engine circulating water in the methanol engine enters the heat exchange unit. The heating device then controls the fan to work so as to provide air to the main combustion chamber, controls the methanol ignition unit to work, and makes the electric infusion pump run to input methanol fuel to the methanol ignition unit, and makes the methanol injector run to inject methanol fuel into the main combustion chamber. The methanol fuel is mixed with air in the main combustion chamber to form a mixed fuel gas, and then the mixed fuel gas is ignited to generate heat, and the heat is passed through the heat exchange plate configured on the main combustion chamber to enter the heat exchange unit to heat the low-temperature engine circulating water to generate high-temperature engine circulating water, and then the high-temperature engine circulating water is used to heat the methanol engine.

Afterwards, the heating device uses the temperature sensor to detect the methanol engine again in the process of heating the methanol engine to obtain the second engine water temperature of the methanol engine, and when the second engine water temperature reaches the preset second temperature threshold T2, the methanol engine is controlled to inject methanol fuel to complete the start-up operation. At the same time, the heating device detects the methanol engine to obtain the third engine water temperature of the methanol engine, and when the third engine water temperature reaches the preset third temperature threshold T3, the heating of the methanol engine is stopped and the power-off and/or shutdown operation is completed.

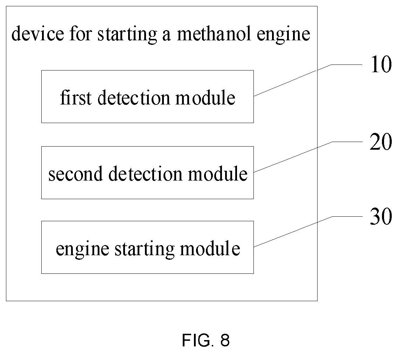

In addition, to achieve the above purpose, the present application also provides a device for starting a methanol engine, which is applied to a heating device, and the heating device heats the methanol engine connected to the heating device by igniting methanol fuel. As shown in FIG. 8, which is a schematic diagram of functional modules according to an an embodiment of the present application. As shown in FIG. 8, the device includes: a first detection module 10, a second detection module 20 and an engine starting module 30.

The first detection module 10 is configured to detect the methanol engine to obtain the first engine water temperature of the methanol engine, and determine whether the first engine water temperature is less than the first temperature threshold.

The second detection module 20 is configured to, in response to that the first engine water temperature is less than the first temperature threshold, detect the methanol engine to obtain the second engine water temperature of the methanol engine.

The engine starting module 30 is configured to, in response to that the second engine water temperature is greater than or equal to a second temperature threshold, control the methanol engine to inject methanol fuel to complete the start-up operation, the second temperature threshold is greater than the first temperature threshold.

The heating device includes: a methanol ignition unit. The second detection module 20, includes: a methanol acquisition unit and an engine heating unit.

The methanol acquisition unit is configured to obtain methanol fuel, and generate a mixed fuel gas corresponding to the methanol fuel in the methanol ignition unit.

The engine heating unit is configured to obtain low-temperature engine circulating water in the methanol engine, and heat the methanol engine through the heat generated by the mixed fuel gas and the low-temperature engine circulating water.

The heating device also includes: a methanol delivery unit and an air intake unit, the methanol delivery unit is connected to the methanol ignition unit, the methanol ignition unit is connected to the air intake unit, and the methanol acquisition unit includes: a first signal acquisition sub-unit and a first control sub-unit.

The first signal acquisition sub-unit is configured to obtain a first control signal.

The first control sub-unit is configured to control the methanol delivery unit and the air intake unit based on the first control signal to generate a mixed fuel gas corresponding to the methanol fuel in the methanol ignition unit.

The methanol ignition unit includes: a methanol injector rail, an electronically controlled methanol injector and a pre-combustion chamber, the methanol injector rail is connected to the electronically controlled methanol injector, and the electronically controlled methanol injector is connected to the pre-combustion chamber. The methanol acquisition unit also includes: a second control sub-unit and a second signal acquisition sub-unit.

The second control sub-unit is configured to control the methanol delivery unit to input the methanol fuel into the methanol injector rail based on the first control signal, and to control the air intake unit to input air into the pre-combustion chamber based on the first control signal.

The second signal acquisition sub-unit is configured to obtain a second control signal, and to control the electronically controlled methanol injector to inject the methanol fuel into the pre-combustion chamber based on the second control signal to generate the mixed fuel gas corresponding to the methanol fuel in the pre-combustion chamber through the methanol fuel and the air.

The heating device also includes: a heat exchange unit, which is connected to the methanol ignition unit. The engine heating unit includes: a third signal acquisition sub-unit and a third control sub-unit.

The third signal acquisition sub-unit is configured to obtain a third control signal.

The third control sub-unit is configured to control the heat exchange unit based on the third control signal to allow the low-temperature engine circulating water in the methanol engine to enter the heat exchange unit.

The engine starting module 30 includes: a third detection unit and a first shutdown unit.

The third detection unit is configured to detect the methanol engine to obtain the third engine water temperature of the methanol engine, and to determine whether the third engine water temperature is greater than or equal to the third temperature threshold.

The first shutdown unit is configured to, in response to that the third engine water temperature is greater than or equal to the third temperature threshold, stop heating the methanol engine, the third temperature threshold is greater than the second temperature threshold.

The engine starting module 30 also includes: a fourth detection unit and a second shutdown unit.

The fourth detection unit is configured to detect the methanol engine to obtain the real-time methanol concentration value of the methanol engine, and to determine whether the real-time methanol concentration value is greater than or equal to the methanol concentration threshold.

The second shutdown unit is configured to output a preset reminder information and stop heating the methanol engine in response to that the real-time methanol concentration value is greater than or equal to the methanol concentration threshold.

In addition, the present application also provides a computer-readable storage medium, on which a computer program is stored, and when the computer program is executed by a processor, the steps of the method for starting the methanol engine described in any of the above embodiments are implemented.

The specific embodiments of the computer-readable storage medium of the present invention are basically the same as the embodiments of the method for starting the methanol engine described above, and are not described here.

In addition, to achieve the above purpose, the present application also provides a heating device, the heating device includes: a heat exchange shell, a methanol delivery unit, a methanol ignition unit, a heat exchange unit and an air intake unit; the heat exchange unit and the air intake unit are provided at the heat exchange shell, and the heat exchange unit and the air intake unit are respectively connected to the methanol ignition unit; the methanol ignition unit is connected to the methanol delivery unit through a pipeline to ignite the methanol fuel delivered by the methanol delivery unit.

In this way, the present application solves the technical problem that the technicians in the related technology need to spend a lot of cost to add an additional gasoline fuel supply system in the methanol engine, so as to ensure that the methanol engine can be started by first injecting part of the gasoline fuel when it is started in a low temperature environment. That is, the present application ignites the methanol fuel by the heating device, and then increases the temperature of the methanol engine based on the heat generated by the methanol fuel during the combustion process, so that the methanol fuel injected by the methanol engine in the low temperature environment can be completely volatilized, so that the methanol engine can also complete the start-up operation work only with methanol fuel in a low temperature environment.

Based on the overall concept of the technical solution of the present application, an embodiment of the heating device of the present application is proposed.

As shown in FIG. 5, the heating device provided in the present application includes:
a heat exchange shell, a methanol delivery unit, a methanol ignition unit, a heat exchange unit and an air intake unit.

The heat exchange unit, the air intake unit and the methanol ignition unit are provided in the heat exchange shell, and the methanol ignition unit is connected to the heat exchange unit and the air intake unit respectively.

The methanol ignition unit is connected to the methanol delivery unit to ignite the methanol fuel delivered by the methanol delivery unit.

**In** the embodiment, a heat exchange shell 13 is configured on the heating device, and a heat exchange unit 30, an air intake unit 32 and a methanol ignition unit 31 are configured inside the heat exchange shell 13. The heat exchange unit 30 and the air intake unit 32 are respectively connected to the methanol ignition unit 31 through the configured pipelines, and the methanol ignition unit 31 is connected to the methanol delivery unit 33 through the pipeline. In this way, the methanol delivery unit 33 can input methanol fuel to the methanol ignition unit 31 through the pipeline. At the same time, the air intake unit 32 absorbs air and transports air to the methanol ignition unit 31, so that the methanol ignition unit 31 ignites the methanol fuel, thereby causing the methanol fuel to burn and generate heat. After that, the heat exchange unit 30 obtains the low-temperature engine circulating cooling water of the methanol engine, and performs the a heat exchange operation on the low-temperature engine circulating cooling water to increase the temperature of the engine circulating cooling water to obtain the engine circulating cooling water with high-temperature, and then the temperature of the methanol engine is increased by the high-temperature engine circulating cooling water, so that the methanol engine can normally inject methanol fuel and complete the start-up operation.

In some feasible embodiments, the methanol ignition unit includes: a methanol injector rail, a methanol injector, an ignition electrode, a pre-combustion chamber and a main combustion chamber.

The main combustion chamber is connected to the heat exchange unit, the main combustion chamber includes a pre-combustion chamber shell, the pre-combustion chamber shell forms the pre-combustion chamber in the main combustion chamber, and the pre-combustion chamber is connected to the air intake unit.

The ignition electrode is provided in the pre-combustion chamber, the ignition electrode is connected to the methanol injector, the methanol injector is connected to the methanol injector rail, and the methanol injector rail is connected to the methanol delivery unit.

The methanol injector is an electronically controlled methanol injector or a mechanical methanol injector.

In the embodiment, as shown in FIG. 6, the methanol ignition unit includes: a methanol injector rail 5, an electronically controlled methanol injector 6, an ignition electrode 7, a pre-combustion chamber 9 and a main combustion chamber 10. The main combustion chamber 10 is connected to the heat exchange unit. The main combustion chamber 10 includes a pre-combustion chamber shell. The pre-combustion chamber shell forms a pre-combustion chamber 9 in the main combustion chamber 10. A plurality of ignition electrodes 7 are provided in the pre-combustion chamber 9. The ignition electrode 7 is connected to the electronically controlled methanol injector 6. The electronically controlled methanol injector 6 is connected to the methanol injector rail 5. The methanol injector rail 5 is connected to the methanol delivery unit through a pipeline.

The methanol delivery unit delivers the methanol fuel to the methanol injector rail 5 through a pipeline, and the methanol injector rail 5 stores the methanol fuel and establishes oil pressure. The electronically controlled methanol injector 6 then controls the methanol fuel in the high-pressure state in the methanol injector rail 5 to be sprayed through the holes configured on the electronically controlled methanol injector 6 based on the received signal, and the methanol fuel is uniformly mixed with the air in the pre-combustion chamber 9 based on the highspeed airflow sent by the air intake system to form a methanol spray 8. **The** ignition electrode 7 ignites the methanol spray 8 formed in the pre-combustion chamber 9, so that the methanol spray 8 burns stably in the pre-combustion chamber 9 and dissipates heat to the main combustion chamber 10.

**It** should be noted that in the embodiment, the electronically controlled methanol injector 6 can be configured with one injection hole or multiple injection holes. As shown in FIG. 4, when the quantity of the injection hole is one, the methanol fuel can be atomized and injected through a single-hole efficient atomization method, and as shown in FIG. 5, when the quantity of the injection hole is multiple, the methanol fuel can be atomized and injected through a multi-hole efficient atomization method.

In some feasible embodiments, the main combustion chamber further includes a heat exchange plate.

The heat exchange plate is connected to the heat exchange unit.

In the embodiment, the main combustion chamber includes a main combustion chamber shell 12 and the heat exchange plate 16, the heat exchange plate 16 is provided at the main combustion chamber shell 12, and the heat exchange plate 16 is connected to the heat exchange unit through the main combustion chamber shell 12; thus, when the methanol spray 8 burns in the pre-combustion chamber 9, the heat generated in the pre-combustion chamber 9 enters the main combustion chamber 10, and the heat then passes through the main combustion chamber shell 12 and the heat exchange plate 16, and enters the heat exchange unit, so that the low-temperature engine circulating cooling water contained in the heat exchange unit obtains the heat generated by the methanol spray 8 during the combustion process.

In some feasible embodiments, the quantity of the ignition electrodes is greater than or equal to the preset quantity of electrodes, the preset quantity of electrodes is greater than or equal to 2.

In the embodiment, as shown in FIG. 6, the quantity of ignition electrodes 7 should be greater than or equal to 2, so that multiple ignition electrodes 7 can easily ignite the methanol spray 8 contained in the pre-combustion chamber 9. For example, when the quantity of ignition electrodes 7 is 4, the methanol spray 8 can be ignited simultaneously by ignition electrodes 7-1 to 7-4.

In some feasible embodiments, the methanol ignition unit further includes: an exhaust channel, a muffler and a drainage channel;
The muffler is provided at the drainage channel, and the drainage channel and the exhaust channel are respectively communicated with the main combustion chamber.

In the embodiment, the methanol ignition unit is also provided with an exhaust channel 14, a muffler 15 and a drainage channel 21, and the exhaust channel 14 and the drainage channel 21 are both provided at the heat exchange shell 13 and communicated with the main combustion chamber 10, and the drainage channel 21 is provided with a muffler 15. In this way, when the methanol spray 8 burns, the exhaust gas generated in the main combustion chamber 10 can be discharged through the exhaust channel 14. At the same time, the water vapor generated by the methanol spray 8 during the combustion process will form condensed water after condensation. The condensed water can be discharged through the drainage channel 21 to avoid the condensed water remaining in the pipeline from freezing under low temperature conditions. At the same time, a muffler 15 is provided at the tail end of the drainage channel 21. The muffler 15 can reduce the noise generated by the heating device when the methanol spray 8 is ignited, further improving the riding experience of passengers.

In some feasible embodiments, the heat exchange unit includes: a heat exchange medium channel, a heat exchange medium inlet, a heat exchange medium outlet, an electronic water pump and an electronic water pump water inlet.

The heat exchange medium inlet is communicated with the heat exchange medium channel, and the heat exchange medium channel is communicated with the heat exchange medium outlet, and is connected to the methanol ignition unit respectively.

The electronic water pump water inlet is connected to the electronic water pump, and the electronic water pump is connected to the heat exchange medium inlet.

In the embodiment, the heat exchange unit includes: a heat exchange medium channel 11, a heat exchange medium inlet 17, a heat exchange medium outlet 18, an electronic water pump 19 and an electronic water pump water inlet 20, the electronic water pump water inlet 20 is communicated with the heat exchange medium inlet 17 through the electronic water pump 19, and the heat exchange medium inlet 17 is communicated with the heat exchange medium outlet 18 through the heat exchange medium channel 11. In this way, the low-temperature engine circulating cooling water in the methanol engine can enter the electronic water pump 19 through the electronic water pump water inlet 20, and the electronic water pump 19 inputs the low-temperature engine circulating cooling water into the heat exchange medium channel 11 through the heat exchange medium inlet 17. The low-temperature engine circulating cooling water obtains the heat generated in the main combustion chamber 10 through the above-mentioned heat exchange plate 16 in the heat exchange medium channel 11, thereby becoming high-temperature engine circulating cooling water. The high-temperature engine circulating cooling water then flows out from the heat exchange medium outlet 18 to return to the methanol engine to increase the temperature of the methanol engine.

In some feasible embodiments, the methanol delivery unit includes: a methanol tank, an electric infusion pump and a methanol filter.

The methanol tank is connected to the electric infusion pump. The electric infusion pump is connected to the methanol filter, and the methanol filter is connected to the methanol ignition unit.

In the embodiment, the methanol delivery unit includes: a methanol tank 1, an electric infusion pump 2 and a methanol filter 3. The methanol tank 1 is connected to the methanol filter 3 through the electric infusion pump 2, and the methanol filter 3 is connected to the methanol injector rail 5 in the above-mentioned methanol ignition unit through a pipeline, so that the methanol tank 1 can input the methanol fuel stored inside into the electric infusion pump 2, and the electric infusion pump 2 then builds pressure on the methanol fuel, and based on the pressure, inputs the methanol fuel into the methanol filter 3, and the methanol filter 3 then inputs the filtered methanol fuel into the methanol injector rail 5 through a pipeline, so that the methanol ignition unit ignites the methanol fuel.

The electric infusion pump 2 is provided with an overflow valve, so that when the pressure of the internal methanol fuel is too high, the electric infusion pump 2 can discharge the methanol fuel to the outside through the overflow valve, thereby reducing the internal pressure.

In some feasible embodiments, the methanol tank includes: a methanol tank shell, a liquid level gauge and an oil suction filter, and the liquid level gauge and the oil suction filter are both provided at the methanol tank shell.

In the embodiment, the methanol tank 1 is provided with a methanol tank shell 26, a liquid level gauge 27 and an oil suction filter 28, and the liquid level gauge 27 and the oil suction filter 28 are provided at the methanol tank shell 26. At the same time, the liquid level gauge 27 is configured with an alarm function. The methanol fuel can be stored in the methanol tank 1, and the methanol fuel reserve in the methanol tank 1 can be detected by the liquid level gauge 27, and then an alarm is sounded when the methanol fuel reserve is insufficient. At the same time, in the process of the methanol tank 1 delivering methanol fuel to the electric infusion pump, the filter 28 can prevent the methanol fuel from containing impurities, so as to improve the combustion efficiency of the methanol fuel.

The methanol tank shell 1 is provided with an oil filling hole 29, so that methanol fuel can be injected into the methanol tank 1 through the oil filling hole 29 to ensure the methanol fuel content in the methanol tank 1.

In some feasible embodiments, the air intake unit includes: an air intake filter and an air intake fan, the air intake filter is connected to the air intake fan, and the air intake fan is connected to the methanol ignition unit.

In the embodiment, the air intake unit includes an air intake filter 22 and an air intake fan 23, and the air intake filter 22 and the air intake fan 23 are both provided at the heat exchange shell 13 of the methanol ignition unit. **In** this way, when the methanol ignition unit needs to ignite methanol fuel, the air intake filter 22 can filter the inhaled air, thereby filtering out large particle impurities contained in the air. At the same time, the air intake fan 23 can measure and control the air content delivered to the pre-combustion chamber 9 and the main combustion chamber 10, so as to better ensure that the methanol spray 8 in the main combustion chamber 10 and the pre-combustion chamber 9 can be completely burned.

In some feasible embodiments, the heating device is also provided with a methanol vapor concentration sensor and a high temperature alarm sensor.

The methanol vapor concentration sensor and the high temperature alarm sensor are respectively provided at the heat exchange shell, the methanol vapor concentration sensor is connected to the methanol ignition unit, and the high temperature alarm sensor is connected to the heat exchange unit.

A methanol vapor concentration sensor 24 and a high temperature alarm sensor 25 are also provided at the heat exchange shell 13. The methanol vapor concentration sensor 24 is connected to the methanol ignition unit, and the high temperature alarm sensor 25 is connected to the heat exchange unit. In this way, the concentration of the methanol spray 8 in the heating device can be detected by the methanol vapor concentration sensor 24, so that when the concentration reaches the preset concentration threshold, an alarm message is generated in time to avoid the risk of flash explosion in the heating device; at the same time, the temperature in the heating device can be detected by the high temperature alarm sensor 25, so as to further avoid the risk of dry burning of the methanol spray 8 during the combustion process.

In some feasible embodiments, the heating device is also provided with a controller.

The controller is provided in the heat exchange shell and is respectively connected to the methanol ignition unit, the heat exchange unit, the methanol delivery unit and the air intake unit.

In the embodiment, the heating device is further provided with a controller 4, which is provided at the heat exchange shell 13, and the controller 4 is respectively connected to the electronically controlled methanol injector 6 in the methanol ignition unit, the ignition electrode 7, the electronic water pump 19 in the heat exchange unit, the electric infusion pump 2 in the methanol delivery unit, and the air intake fan 23 in the air intake unit. In this way, when the methanol engine needs to be heated, the controller 4 can control the electric infusion pump 2 to start to deliver methanol fuel from the methanol tank 1 to the electronically controlled methanol injector 6. At the same time, the controller 4 can control the air intake fan 23 to rotate to deliver air to the pre-combustion chamber 9. The controller 4 can then control the electronically controlled methanol injector 6 to inject methanol fuel to form a methanol spray 8, and control the ignition electrode 7 to ignite the methanol spray 8 to generate heat in the main combustion chamber 10. The controller 4 can then control the electronic water pump 19 to start, so that the low-temperature engine circulating cooling water is input to the heat exchange medium inlet 17 through the electronic water pump 19 to enter the heat exchange medium channel 11, so that the low-temperature engine circulating cooling water obtains heat through the heat exchange medium channel 11 and becomes high-temperature engine circulating cooling water, and then the high-temperature engine circulating cooling water leaves the heat exchange unit through the heat exchange medium outlet 18 to heat up the methanol engine.

The heating device provided in the present application includes: a heat exchange shell, a methanol delivery unit, a methanol ignition unit, a heat exchange unit and an air intake unit; the heat exchange shell is provided with the heat exchange unit, the air intake unit and the methanol ignition unit, and the methanol ignition unit is connected to the heat exchange unit and the air intake unit respectively; the methanol ignition unit is connected to the methanol delivery unit to ignite the methanol fuel delivered by the methanol delivery unit.

That is, the heating device provided by the present application is provided with a heat exchange unit, an air intake unit and a methanol ignition unit on a heat exchange shell, and the heat exchange unit and the air intake unit are respectively connected to the methanol ignition unit, and at the same time, a methanol delivery unit is configured to be connected to the methanol ignition unit through a pipeline, so that the methanol delivery unit delivers methanol fuel to the methanol ignition unit through the pipeline, and the air intake unit delivers air to the methanol ignition unit, so that the methanol ignition unit can ignite the methanol fuel, so that the methanol fuel burns and generates heat, and then the engine circulating cooling water obtains the heat generated when the methanol fuel is ignited through the heat exchange unit, and finally the engine circulating cooling water carries the heat to heat the methanol engine to increase the temperature of the methanol engine.

In this way, the present application solves the technical problem that the technicians in the related art need to spend a lot of money to add an additional gasoline fuel supply system in the methanol engine, so as to ensure that the methanol engine can be started by first injecting part of the gasoline fuel when starting in a low temperature environment. That is, the present application ignites the methanol fuel by the heating device, and then increases the temperature of the methanol engine based on the heat generated by the methanol fuel during the combustion process, so that the methanol fuel injected by the methanol engine in a low temperature environment can be completely volatilized, so that the methanol engine can also complete the start-up operation work only with methanol fuel in a low temperature environment.

In addition, by preheating the engine circulating cooling water in the methanol engine, the engine circulating cooling water can also heat the lubricating oil in the methanol engine during operation, thereby improving the fluidity of the lubricating oil and the oiling ability of the cylinder liner, thereby reducing the wear of the piston and cylinder liner of the methanol engine at the start time, and improving the engine life.

It should be noted that in this article, the terms "include", "comprise" or any other variants thereof are intended to cover non-exclusive inclusion, so that the process, method, article or system including a series of elements includes not only those elements, but also includes other elements not explicitly listed, or also includes elements inherent to such process, method, article or system. **In** the absence of further restrictions, an element defined by the phrase "including a ..." does not exclude the existence of other identical elements in the process, method, article or system including the element.

The serial numbers of the above embodiments of the present application are only for description and do not represent the advantages and disadvantages of the embodiments.

The above are only some embodiments of the present application, and do not limit the scope of the present application thereto. Under the inventive concept of the present application, equivalent structural transformations made according to the description and drawings of the present application, or direct/indirect application in other related technical fields, are included in the scope of the present application.

## Claims

1. A method for starting a methanol engine, applied to a heating device, the heating device heating the methanol engine connected to the heating device by igniting methanol fuel, and the method for starting the methanol engine **characterized by** comprising following steps:
detecting the methanol engine to obtain a first engine water temperature of the methanol engine, and determining whether the first engine water temperature is less than a first temperature threshold;
in response to that the first engine water temperature is less than the first temperature threshold, heating the methanol engine, and detecting the methanol engine to obtain a second engine water temperature of the methanol engine; and
in response to that the second engine water temperature is greater than or equal to a second temperature threshold, controlling the methanol engine to inject the methanol fuel to complete a start-up operation, wherein the second temperature threshold is greater than the first temperature threshold.

2. The method for starting the methanol engine according to claim 1, wherein the heating device comprises: a methanol ignition unit; and the step of heating the methanol engine comprises:
obtaining the methanol fuel, and generating a mixed fuel gas corresponding to the methanol fuel in the methanol ignition unit; and
obtaining low-temperature engine circulating water in the methanol engine, and heating the methanol engine through heat generated by the mixed fuel gas and the low-temperature engine circulating water.

3. The method for starting the methanol engine according to claim 2, wherein the heating device further comprises: a methanol delivery unit and an air intake unit; the methanol delivery unit is connected to the methanol ignition unit, and the methanol ignition unit is connected to the air intake unit; the step of generating the mixed fuel gas corresponding to the methanol fuel in the methanol ignition unit comprises:
obtaining a first control signal; and
based on the first control signal, controlling the methanol delivery unit and the air intake unit to generate a mixed fuel gas corresponding to the methanol fuel in the methanol ignition unit.

4. The method for starting the methanol engine according to claim 3, wherein the methanol ignition unit comprises: a methanol injector rail, an electronically controlled methanol injector and a pre-combustion chamber; the methanol injector rail is connected to the electronically controlled methanol injector, and the electronically controlled methanol injector is connected to the pre-combustion chamber; the step of based on the first control signal, controlling the methanol delivery unit and the air intake unit to generate the mixed fuel gas corresponding to the methanol fuel in the methanol ignition unit comprises:
controlling the methanol delivery unit to input the methanol fuel into the methanol injector rail based on the first control signal, and controlling the air intake unit to input air into the pre-combustion chamber based on the first control signal; and
obtaining a second control signal, and controlling the electronically controlled methanol injector to inject the methanol fuel into the pre-combustion chamber based on the second control signal, to generate the mixed fuel gas corresponding to the methanol fuel in the pre-combustion chamber through the methanol fuel and the air.

5. The method for starting the methanol engine according to claim 2, wherein the heating device further comprises: a heat exchange unit, and the heat exchange unit is connected to the methanol ignition unit; the step of obtaining low-temperature engine circulating water in the methanol engine comprises:
obtaining a third control signal; and
based on the third control signal, controlling the heat exchange unit to allow the low-temperature engine circulating water in the methanol engine to enter the heat exchange unit.

6. The method for starting the methanol engine according to claim 1, wherein after the step of controlling the methanol engine to inject methanol fuel to complete the start-up operation, the method further comprises:
detecting the methanol engine to obtain a third engine water temperature of the methanol engine, and determining whether the third engine water temperature is greater than or equal to a third temperature threshold; and
in response to that the third engine water temperature is greater than or equal to the third temperature threshold, stopping heating the methanol engine, wherein the third temperature threshold is greater than the second temperature threshold.

7. The method for starting the methanol engine according to claim 1, wherein after the step of controlling the methanol engine to inject methanol fuel to complete the start-up operation, the method further comprises:
detecting the methanol engine to obtain a real-time methanol concentration value of the methanol engine, and determining whether the real-time methanol concentration value is greater than or equal to a methanol concentration threshold; and
in response to that the real-time methanol concentration value is greater than or equal to the methanol concentration threshold, outputting preset reminder information and stopping heating the methanol engine.

8. A device for starting a methanol engine, applied to a heating device, the heating device heating the methanol engine connected to the heating device by igniting methanol fuel, and the device for starting the methanol engine **characterized by** comprising:
a first detection module, configured to detect the methanol engine to obtain a first engine water temperature of the methanol engine, and determine whether the first engine water temperature is less than a first temperature threshold;
a second detection module, configured to, in response to that the first engine water temperature is less than the first temperature threshold, heat the methanol engine, and detect the methanol engine to obtain a second engine water temperature of the methanol engine; and
an engine starting module, configured to, in response to that the second engine water temperature is greater than or equal to a second temperature threshold, control the methanol engine to inject methanol fuel to complete the start-up operation, wherein the second temperature threshold is greater than the first temperature threshold.

9. A computer-readable storage medium, **characterized in that** a computer program is stored on the computer-readable storage medium; when the computer program is executed by a processor, the steps of the method for starting the methanol engine according to any one of claims 1 to 7 are implemented.

10. A heating device, **characterized by** comprising:
a heat exchange shell;
a methanol delivery unit;
a methanol ignition unit;
a heat exchange unit; and
an air intake unit;
wherein the heat exchange unit, the air intake unit and the methanol ignition unit are provided in the heat exchange shell, and the methanol ignition unit is connected to the heat exchange unit and the air intake unit respectively; and
the methanol ignition unit is connected to the methanol delivery unit to ignite the methanol fuel delivered by the methanol delivery unit.

11. **The** heating device according to claim 10, wherein the methanol ignition unit comprises: a methanol injector rail, a methanol injector, an ignition electrode, a pre-combustion chamber and a main combustion chamber;
the main combustion chamber is connected to the heat exchange unit, and the main combustion chamber comprises a pre-combustion chamber shell; the pre-combustion chamber shell is configured to form the pre-combustion chamber in the main combustion chamber, and the pre-combustion chamber is connected to the air intake unit;
the ignition electrode is provided in the pre-combustion chamber, and the ignition electrode is connected to the methanol injector; the methanol injector is connected to the methanol injector rail, and the methanol injector rail is connected to the methanol delivery unit; and
the methanol injector is an electronically controlled methanol injector or a mechanical methanol injector.

12. **The** heating device according to claim 11, wherein the main combustion chamber further comprises a heat exchange plate; and the heat exchange plate is connected to the heat exchange unit.

13. **The** heating device according to claim 11, wherein a quantity of the ignition electrodes is greater than or equal to a preset quantity of electrodes, and the preset quantity of electrodes is greater than or equal to 2.

14. **The** heating device according to claim 11, wherein the methanol ignition unit further comprises: an exhaust channel, a muffler and a drainage channel; and the muffler is provided at the drainage channel, and the drainage channel and the exhaust channel are respectively communicated with the main combustion chamber.

15. **The** heating device according to claim 10, wherein the heat exchange unit comprises: a heat exchange medium channel, a heat exchange medium inlet, a heat exchange medium outlet, an electronic water pump and an electronic water pump water inlet;
the heat exchange medium inlet is communicated with the heat exchange medium channel, and the heat exchange medium channel is communicated with the heat exchange medium outlet and is connected to the methanol ignition unit; and
the electronic water pump water inlet is connected to the electronic water pump, and the electronic water pump is connected to the heat exchange medium inlet.

16. The heating device according to claim 10, wherein the methanol delivery unit comprises: a methanol tank, an electric infusion pump and a methanol filter; and
the methanol tank is connected to the electric infusion pump; the electric infusion pump is connected to the methanol filter, and the methanol filter is connected to the methanol ignition unit.

17. The heating device according to claim 16, wherein the methanol tank comprises: a methanol tank shell, a liquid level gauge and an oil suction filter, and the liquid level gauge and the oil suction filter are both provided at the methanol tank shell.

18. The heating device according to claim 10, wherein the air intake unit comprises: an air intake filter and an air intake fan; the air intake filter is connected to the air intake fan, and the air intake fan is connected to the methanol ignition unit.

19. The heating device according to any one of claims 10 to 18, wherein the heating device is further provided with a methanol vapor concentration sensor and a high temperature alarm sensor; and
the methanol vapor concentration sensor and the high temperature alarm sensor are respectively provided at the heat exchange shell; the methanol vapor concentration sensor is connected to the methanol ignition unit, and the high temperature alarm sensor is connected to the heat exchange unit.

20. The heating device according to any one of claims 10 to 19, wherein the heating device is further provided with a controller; and
the controller is provided in the heat exchange shell, and is respectively connected to the methanol ignition unit, the heat exchange unit, the methanol delivery unit and the air intake unit.
